# EUROPÄISCHE PATENTSCHRIFT

(11) **EP 4 439 035 B1**
(45) Veröffentlichungstag und Bekanntmachung des Hinweises auf die Patenterteilung: **18.11.2026**
(21) Anmeldenummer: 23164315.6
(22) Anmeldetag: 27.03.2023
(51) Int. Cl.: E03B 7/02, G01M 3/00, E03B 7/00, F16L 57/00, F16L 59/15, F17D 5/06, G01M 3/18, G01M 5/00, G01M 99/00

(54) **SENSORVORRICHTUNG, SYSTEM UND VERFAHREN ZUR ÜBERWACHUNG DER ISOLATIONSQUALITÄT EINES WÄRMEISOLIERTEN LEITUNGSROHRS**
SENSOR DEVICE, SYSTEM AND METHOD FOR MONITORING INSULATION QUALITY OF A THERMALLY INSULATED CONDUIT
DISPOSITIF DE CAPTEUR, SYSTÈME ET PROCÉDÉ DE SURVEILLANCE DE LA QUALITÉ D'ISOLATION D'UN TUYAU ISOLÉ THERMIQUEMENT

(43) Veröffentlichungstag der Anmeldung: 02.10.2024
(73) Patentinhaber: Brugg Rohr AG Holding, 5200 Brugg (CH)
(72) Erfinder: MOSER, Simon, 8400 Winterthur (CH); RENNHARD, Patrick, 8414 Buch am Irchel (CH)
(74) Vertreter: E. Blum & Co. AG

(56) Entgegenhaltungen:
- EP-A1- 2 112 491
- CN-A- 113 503 844
- DE-A1- 102020 003 135

## Beschreibung

### Gebiet der Erfindung

Die Erfindung betrifft eine Sensorvorrichtung zur Überwachung der Isolationsqualität eines wärmeisolierten Leitungsrohrs, ein System mit einer solchen Sensorvorrichtung, ein Verfahren zum Betrieb des Systems und ein wärmeisoliertes Leitungsrohr gemäss dem jeweiligen unabhängigen Anspruch.

### Hintergrund

Wärmeisolierte Leitungsrohre sind bekannt. Sie werden beispielweise in Fernwärmenetze verwendet. Solche Leitungsrohre bestehen heute oft aus einem metallischen Innenrohr, einem Kunststoff-Aussenmantel und dazwischen einer Isolationsschicht, nachfolgend auch wärmeisolierende Schicht oder Wärmedämmung genannt. Da insbesondere für die Fernwärme eine effiziente Isolation des wärmetragenden Mediums von der Aussenumgebung zentral ist, wurde diesem Aspekt im Laufe der Zeit durch Weiterentwicklungen Rechnung getragen, insbesondere indem die Zusammensetzung des Leitungsrohrs und diejenige der Isolationsschicht ständig verbessert wurden. Dabei wurde auch in Betracht gezogen, dass die Isolationsschicht mit der Zeit aufgrund von äusseren Umständen, chemischen Alterungsprozessen, etc. bezüglich ihrer Isolationsfähigkeit Schaden nehmen kann. Zu diesem Zweck sind Lösungen vorgeschlagen worden, bei den innerhalb der Isolationsschicht zum Zeitpunkt der Herstellung des Leitungsrohrs Metalldrähte eingebracht wurden. Mittels Impedanzmessungen zwischen diesen Metalldrähten und dem Innenrohr ist es möglich undichte Stellen festzustellen und zu orten, mit anderen Worten ist es möglich die Isolationsqualität eines wärmeisolierten Leitungsrohrs zu messen und zu überwachen. Mit der Entwicklung in die Richtung, dass immer häufiger Kunststoffinnenrohre verwendet werden, kann diese bewährte Methode zum Feststellen und Orten von undichten Stellen nicht mehr verwendet werden, da offensichtlich keine Impedanzmessung mit einem Kunststoffrohr durchgeführt werden kann.

Die chinesische Patentanmeldung CN 113 503 844 A betrifft ein Detektionssystem für Fehler in der Isolationsschicht von Leitungen. Das System umfasst mehrere Sensoren, eine Datenerfassung, ein Drahtlossender und ein Computerterminal zur Fernsteuerung. Das System soll einen Luftspalt detektieren, der sich aufgrund des Lösens der Isolationsschicht vom Innenrohr im unteren Bereich des Innenrohrs aufgrund der Schwerkraft bildet. Ein erster Sensor ist oben auf dem Innenrohr befestigt, ein zweiter Sensor ist unten auf der Oberfläche der Isolationsschicht befestigt und ein dritter Sensor ist auf der unteren Oberfläche der Isolationsschicht befestigt.

Die europäische Patentanmeldung EP 2 112 491 A1 (D2) befasst sich mit einer Vorrichtung zur Detektion von Undichtigkeiten bei Rohrleitungen mit Innenrohr, Aussenrohr und Isolationsschicht. Die Vorrichtung umfasst Sensorleitungen die in der Isolationsschicht eingebettet sind.

Die deutsche Patentanmeldung DE 10 2020 003135 A1 (D3) offenbart eine Sensoreinrichtung zur Funktionsüberwachung einer Rohrleitung, die einen elektrischen Leiter und eine Einrichtung zur Messung des Potentials zwischen dem Leiter und einem Referenzpotential umfasst. Der Fokus liegt darin, die zu übertragende Datenmenge vom Sensor gering zu halten, indem ein reduziertes Binärsystem verwendet wird. Als Kommunikationseinheit ist eine LoRaWan Einheit vorgesehen. Dieser Einheit ist ein Gateway zur drahtlosen Datenübertragung an eine Empfangseinrichtung nachgeschaltet.

### Darstellung der Erfindung

Aufgabe der Erfindung ist es eine Lösung bereitzustellen, die eine einfache Überwachung der Isolationsqualität eines wärmeisolierten Leitungsrohrs unabhängig vom Material des Innenrohrs ermöglicht und eine flexible Konfiguration von Messparametern ermöglicht.

Die Aufgabe wird **in einem ersten Aspekt** der Erfindung mit einer Sensorvorrichtung für ein wärmeisoliertes Leitungsrohr gelöst, welches Leitungsrohr ein Innenrohr, einen das Innenrohr umgebenden Aussenmantel aus Kunststoff und eine wärmeisolierende Schicht zwischen dem Innenrohr und dem Aussenmantel umfasst. Die Sensorvorrichtung umfasst mindestens einen Sensor zur Messung mindestens eines die Isolationsqualität direkt oder indirekt charakterisierenden Parameters der wärmeisolierenden Schicht. Weiter umfasst sie ein Steuerungsmodul zum Auslösen von Sensormessungen und Auslesen von Messdaten vom Sensor, und ein erstes Energieversorgungsmodul für den mindestens einen Sensor und das Steuerungsmodul. Das Steuerungsmodul ist derart ausgestaltet, dass es mittels drahtloser Datenübertragung einer benutzerseitigen Fernsteuerungsvorrichtung Messdaten vom mindestens einen Sensor sendet. Der mindestens eine Sensor ist in der wärmeisolierenden Schicht des Leitungsrohrs eingebettet und derart ausgestaltet, dass er als charakterisierenden Parameter eine CO2-Konzentration misst.

Beim Leitungsrohr kann es sich um ein im Erdreich vergrabenes wärmeisoliertes Leitungsrohr handeln.

Aufgrund der Verwendung eines Sensors, der einen die Isolationsqualität der wärmeisolierenden Schicht charakterisierenden Parameter messen kann, wird der Weg der Impedanzmessung, bei dem ein Rückschluss über die Isolationsqualität der wärmeisolierenden Schicht nur unter Einbeziehung des Innenrohrs selbst möglich war, verlassen, und es wird eine direkte Messung durchgeführt, bei der das Material des Innenrohrs keine Rolle spielt.

Die Aufgabe wird **in einem zweiten Aspekt** der Erfindung mit einem System gelöst, das mindestens eine am Leitungsrohr angeordnete Sensorvorrichtung zur Messung mindestens eines für die Isolationsqualität charakteristischen Parameters gemäss dem ersten Aspekt der Erfindung umfasst. Weiter umfasst das System mindestens eine benutzerseitige Fernsteuerungsvorrichtung zur Konfiguration der Sensorvorrichtung und Auslösung von Messungen, wobei die Sensorvorrichtung und die benutzerseitige Fernsteuerungsvorrichtung derart ausgestaltet sind, dass sie drahtlos miteinander kommunizieren.

Die Aufgabe wird **in einem dritten Aspekt** der Erfindung mit einem wärmeisolierten Leitungsrohr gelöst, das ein Innenrohr, insbesondere aus Kunststoff, einen das Innenrohr umgebenden Aussenmantel aus Kunststoff und eine wärmeisolierende Schicht zwischen dem Innenrohr und dem Aussenmantel umfasst. Das wärmeisolierte Leitungsrohr umfasst weiter mindestens eine Sensorvorrichtung nach dem ersten Aspekt der Erfindung.

Die Aufgabe wird **in einem vierten Aspekt** der Erfindung mit einem Verfahren zum Betrieb des Systems zur Überwachung der Isolationsqualität eines wärmeisolierten Leitungsrohrs gemäss dem zweiten Aspekt der Erfindung gelöst. Das Verfahren umfasst die Schritte:
a) Aufbauen einer Internet-Verbindung von einem Applikationsserver über einen Netzwerkserver und einen Netzwerk-Gateway des Systems,
b) Anmelden des Steuerungsmoduls einer Sensorvorrichtung über den Netzwerk-Gateway bei einem Join-Server,
c) Aktivieren mindestens eines Sensors der Sensorvorrichtung indem ein Messthread für den mindestens einen Sensor im Steuerungsmodul gestartet wird,
d) Durchführen mindestens einer Messung mittels des mindestens einen Sensors,
e) Übertragen von Messdaten des mindestens einen Sensors mittels dem Steuerungsmodul zum Netzwerk-Gateway und über die Internet-Verbindung zum Applikationsserver,
f) Auswerten der Messdaten auf dem Applikationsserver, und
g) optional Wiederholen der Schritte d) bis f).

Die erfindungsgemässe Sensorvorrichtung hat den Vorteil, dass sie Parameter misst, die charakterisierende Eigenschaften der Isolation selbst betreffen und somit unabhängig vom Material des Innerohrs sind. Dadurch, dass die Messungen drahtlos übertragen werden, ergeben sich eine hohe Flexibilität bei der Aktivierung bestimmter Messpunkte sowie die Möglichkeit der einfachen Konfigurierbarkeit der Sensoren. Nicht zuletzt können mehrere Parametertypen gemessen werden, was im Gegensatz zu der bekannten Impedanzmethode bei der nur ein Parametertyp messbar ist, weitere Aufschlüsse über den Zustand der Isolationsschicht geben kann.

Das erfindungsgemässe System und das Verfahren zu dessen Betrieb stellen eine Gesamtlösung bereit, im Rahmen derer neben den bereits genannten Vorteilen der Benutzer die Möglichkeit hat, mittels der Fernsteuerungsvorrichtung die Sensorvorrichtungen fernzusteuern und zu konfigurieren, wodurch er je nach zu berücksichtigenden Faktoren wie äussere Umgebung des Prüflings (Leitungsrohr) die Überwachung bzw. Überprüfung anpassen kann.

Ein erfindungsgemässes Leitungsrohr, das schon bei der Herstellung mit Sensorvorrichtungen bestückt ist, vereinfacht die spätere Überwachung indem er ohne weitere Schritte direkt nach dem Einbau diesbezüglich aktiviert werden kann.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Querschnitt durch ein im Erdreich vergrabenes Leitungsrohr mit einer erfindungsgemässen Sensorvorrichtung in vereinfachter Darstellung,
Fig. 2 einen Längsschnitt des Leitungsrohrs aus Fig. 1,
Fig. 3 eine vereinfachte Darstellung eines Systems zur Überwachung der Isolationsqualität eines wärmeisolierten Leitungsrohrs,
Fig. 4 eine Symbolansicht der Zusammensetzung eines Netzwerk-Gateways gemäss der Erfindung, und
Fig. 5 eine schematische Ansicht der Komponenten eines Steuerungsmoduls der Sensorvorrichtung nach Fig. 2.

### Wege zur Ausführung der Erfindung

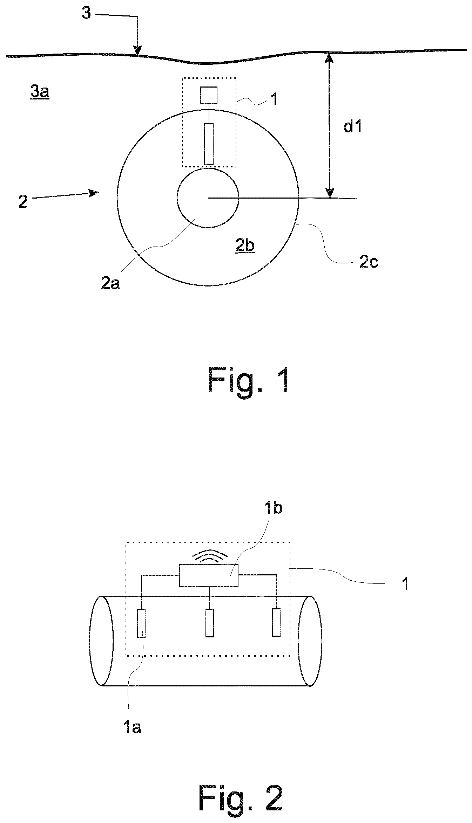

**Fig. 1** zeigt einen Querschnitt durch ein im Erdreich 3 in einer Tiefe d1 vergrabenes Leitungsrohr 2 mit einer erfindungsgemässen Sensorvorrichtung 1 zur Überwachung der Isolationsqualität des Leitungsrohrs in vereinfachter Darstellung. Die Tiefe d1 ist zwischen der Längsachse des Leitungsrohrs und der Oberfläche 3 des Erdreichs direkt über der Längsachse gemessen. Die Tiefe d1 soll für die hier bevorzugte Anwendung eines Fernwärmerohrs zwischen 1m und 2m betragen.

Das wärmeisolierte Leitungsrohr umfasst ein Innenrohr 2a, einen das Innenrohr umgebenden Aussenmantel 2c aus Kunststoff und eine wärmeisolierende Schicht 2b zwischen dem Innenrohr und dem Aussenmantel. Das Innenrohr ist bevorzugt aus Kunststoff, der sich für die Anwendung als Medium-leitendes Fernwärmerohr bewährt hat, es könnte jedoch aus Metall sein.

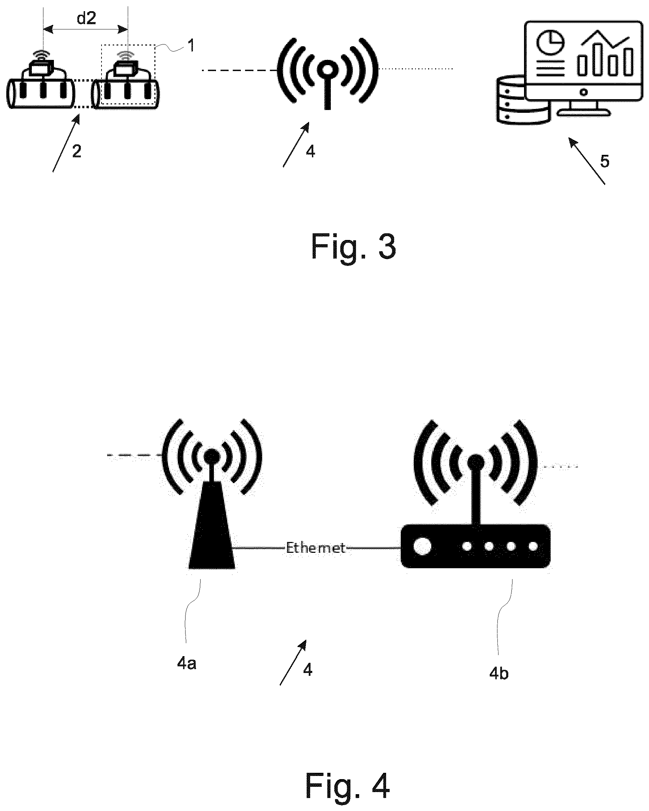

**Fig. 2** zeigt einen Längsschnitt des Leitungsrohrs aus Fig. 1. Das Leitungsrohr umfasst bevorzugt eine Vielzahl von Sensorvorrichtungen 1, die in einem Abstand d2 (Fig. 3) voneinander zwischen 5m und 15m, bevorzugt 10m, entlang des Leitungsrohrs verteilt sind. Hier ist beispielhaft nur ein Abschnitt des Leitungsrohrs gezeigt. Jede Sensorvorrichtung umfasst in diesem Beispiel drei Sensoren 1a.

Die Sensoren 1a sind zur Messung mindestens eines die Isolationsqualität charakterisierenden Parameters ausschliesslich der wärmeisolierenden Schicht ausgestaltet und in der wärmeisolierenden Schicht 2b des Leitungsrohrs eingebettet. Mit anderen Worten bedeutet "ausschliesslich", dass der Sensor Messungen durchführt, die komplett unabhängig vom Material des Innenrohrs des Leitungsrohrs sind. Damit ist die o.g. Impedanz als Parameter ausgeschlossen. Die Sensoren sind erfindungsgemäss derart ausgestaltet, dass sie als charakterisierenden Parameter eine CO2-Konzentration messen. Zur Messung der CO2-Konzentration bzw. der Wärmeleitfähigkeit kann ein Sensor vom Typ STC31 der Firma Sensirion, Stäfa, Schweiz, verwendet werden. Dabei ist die CO2-Konzentration kein direkter Indikator für die Isolationsqualität der wärmeisolierenden Schicht jedoch lässt sich aus diesem Parameter die Wärmeleitfähigkeit herleiten, die wiederum die Isolationseigenschaften beschreibt. Mit anderen Worten gehört die CO2-Konzentration zu einem anspruchsgemäss indirekt die Isolationsqualität charakterisierenden Parametertyp, während die anderen genannten Parameter zu den anspruchsgemäss direkt charakterisierenden Parametern gehören. Die noch nicht publizierte europäische Patentanmeldung mit der Anmeldenummer 21207259.9, eingereicht am 9. November 2021, enthält eine detaillierte Beschreibung der CO2-Konzentration Messung mittels eines in einem wärmeisolierenden Schaum eingebetteten Sensor wie oben angegeben. Daher wird hier auf eine detaillierte Beschreibung verzichtet. Für die vorliegende Erfindung steht die Weitergabe von gemessenen Werten im Vordergrund.

Die Sensorvorrichtung 1 umfasst weiter ein Steuerungsmodul 1b zum Auslösen von Sensormessungen und Auslesen von Messdaten vom Sensor. Das Steuerungsmodul ist derart ausgestaltet, dass es mittels drahtloser Datenübertragung einer benutzerseitigen Fernsteuerungsvorrichtung Messdaten vom mindestens einen Sensor sendet, was besonders vorteilhaft ist wenn das Leitungsrohr im Erdreich vergraben ist. Das Steuerungsmodul ist weiter derart ausgestaltet, dass es Konfigurationsdaten für den Sensor mit einer benutzerseitigen Fernsteuerungsvorrichtung austauscht. Das Steuerungsmodul wird später im Kontext eines erfindungsgemässen Systems detailliert erläutert.

Das Steuerungsmodul kann in einer Ausführungsform an der Aussenwand des Aussenmantels des Leitungsrohrs befestigt sein. Mit Vorteil ist es dadurch leicht zugänglich und kann leicht ausgetauscht werden. Alternativ kann das Steuerungsmodul in der wärmeisolierenden Schicht eingebettet sein. In diesem Fall ist es besser von äusseren Einflüssen geschützt, insbesondere bei vergrabenem Leitungsrohr.

Bei der ersten Alternative ist das Steuerungsmodul bevorzugt drahtgebunden durch den Aussenmantel des Leitungsrohrs hindurch mit den Sensoren verbunden. Die drahtgebundene Verbindung kann aber auch bei in der wärmeisolierenden Schicht eingebettetem Steuerungsmodul verwende werden.

Alternativ kann das Steuerungsmodul drahtlos mit dem mindestens einen Sensor verbunden sein.

**Fig. 3** zeigt eine vereinfachte Darstellung eines Systems zur Überwachung der Isolationsqualität des wärmeisolierten Leitungsrohrs. In der Figur sind zwei beispielhafte aufeinanderfolgende Abschnitte des Leitungsrohrs gezeigt, die jeweils eine Sensorvorrichtung gemäss Fig. 2 haben, welche Sensorvorrichtungen im Abstand d2 voneinander angeordnet sind. Das System umfasst also zwei am Leitungsrohr angeordnete Sensorvorrichtungen 1 und eine benutzerseitige Fernsteuerungsvorrichtung 5 für die Sensorvorrichtung. Die Sensorvorrichtungen und die benutzerseitige Fernsteuerungsvorrichtung 5 sind derart ausgestaltet, dass sie drahtlos miteinander kommunizieren. In diesem Beispiel geschieht dies mittels einem Netzwerk-Gateway 4 der Fernsteuerungsvorrichtung 5. Das System umfasst in der Praxis eine Vielzahl von Sensorvorrichtungen, welche in Abständen d2 voneinander entlang des Leitungsrohrs an diesem vorgesehen sind und eine Vielzahl von Netzwerk-Gateways 4. Jedes Netzwerk-Gateway ist mit einer bestimmten Anzahl von Sensorvorrichtungen verbunden, hier beispielhaft mit 2 Sensorvorrichtungen. Die bestimmte Anzahl von Sensorvorrichtungen hängt vom Abstand d2 zwischen benachbarten Sensorvorrichtungen ab. Dabei gilt vorzugsweise die Massgabe, dass das Netzwerk-Gateway von der entferntesten ihm zugeordneten Sensorvorrichtung höchstens so weit entfernt ist, dass der Signal-Rausch-Abstand (SNR) für eine Verbindung zwischen dem Netzwerk-Gateway und dieser Sensorvorrichtung mindestens 4 dB nach Kodierungsgewinn beträgt.

Der Netzwerk-Gateway 4 ist in Ausführungsformen über der Erdoberfläche, bevorzugt in unmittelbarer Nähe der Erdoberfläche, fest installiert. Der Vorteil dieser Lösung ist, dass über den Gateway kontinuierlich Messdaten von den zugeordneten Sensoren abgerufen werden können. Alternativ kann ein mobiler Netzwerk-Gateway vorgesehen sein, der zur Kommunikation mit einer oder mehreren Sensorvorrichtungen entlang dem Leitungsrohr bewegbar ist. Diese Alternative hat den Vorteil, dass der finanzielle Aufwand geringer ist und dass der mobile Gateway nicht dauernd den Elementen ausgesetzt ist und nicht vor unerlaubtem Zugriff geschützt werden muss.

**Fig. 4** zeigt eine Symbolansicht der Zusammensetzung des Netzwerk-Gateways 4 aus Fig. 3. Die gestrichelten Linien in beiden Figuren stehen für die drahtlose Verbindung zu den Sensorvorrichtungen hin und die gepunkteten Linien für die drahtlose Verbindung zur Benutzerseite, also zur Fernsteuerungsvorrichtung hin. Der Netzwerk-Gateway umfasst sensorseitig einen Gateway 4a und benutzerseitig einen Router, vorzugsweise einen LTE-Router 4b, die miteinander mittels Ethernet verbunden sind. Der Gateway 4a ist vorzugsweise ein LoRaWAN^{®}-Gateway, was später erläutert wird.

Nach der Beschreibung der Aspekte der Zusammensetzung und der Anordnung der Elemente der Erfindung wird nachfolgend der Aspekt der drahtlosen Datenübertragung näher erläutert, da die bevorzugte Verwendung der Erfindung für und in vergrabenen Leitungsrohren angesiedelt ist, was erhebliche Anforderungen an der Datenübertragung im Hinblick auf die Zuverlässigkeit darstellt. In diesem Zusammenhang wird angemerkt, dass Erläuterungen bezogen auf entsprechenden Modulen für die Datenübertragung des Steuerungsmoduls auch für die entsprechende Gegenstelle der Fernsteuerungsvorrichtung ohne explizite Bezugnahme gelten sollen, so dass Fig. 3 und Fig. 4 nun zusammen betrachtet werden sollen.

Das Steuerungsmodul umfasst eine Antenne (nicht gezeigt) für die drahtlose Datenübertragung mit der Fernsteuerungsvorrichtung.

Weiter umfasst das Steuerungsmodul ein Bitübertragungsschichtmodul zum Senden und Empfangen von Konfigurationsdaten und/oder Messdaten enthaltenden Funksignalen mittels der Antenne und ein Medienzugriffssteuerungsmodul zur Steuerung der Bitübertragungsschichtmoduls. Das Bitübertragungsschichtmodul und der Gateway 4a sind zum paketbasierten Senden und Empfangen von Daten mit einer Frequenz ausgewählt aus: 13.56 MHz, 27 MHz, 169 MHz, 433 MHz, 868 MHz, 915 MHz, 2.4 GHz, und einer Datenrate zwischen 292 bit/s und 50 kbit/s ausgestaltet. Es ist bevorzugt wenn ein Datenpaket bei der Übertragung eine Chirp-Spread-Spectrum-Modulation (CSS) für die Präambel und eine Frequency-Shift-Chirp-modulierte Payload (FSCM) umfasst. Für Anwendungen in Europa ist bevorzugt eine Frequenz von 868 MHz zu verwenden, da sich diese im öffentlichen ISM-Band befindet.

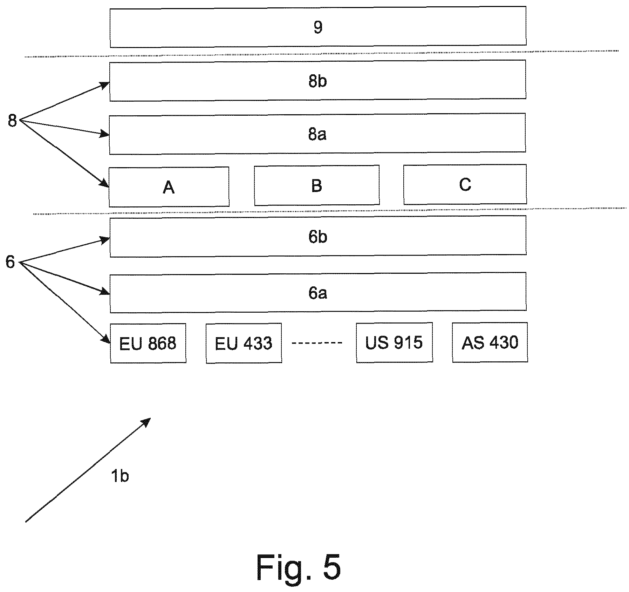

Es ist bevorzugt wenn für die Datenübertragung ein LoRa^{®} bzw. LoRaWAN^{®} Protokoll implemetiert ist, was in **Fig. 5** gezeigt ist. Dabei bezieht sich LoRa^{®} auf die das Frequenzband bestimmende unterste Stufe des physikalischen Layers 6 (Bitübertragungsschichtmodul) gemäss dem OSI 7-Layer Model. Dabei wird eine proprietäre Abwandlung der o.g. CSS-Modulation verwendet, die in dieser Erfindung noch bevorzugter als die CSS-Modulation ist. In der Figur sind im physikalischen Layer 6 einige beispielhafte Frequenzen der o.g. Frequenzbänder angegeben. Der physikalische Layer umfasst ausserdem das ISM Band 6a, wobei für die Erfindung jene Frequenzen verwendet werden, die im betreffenden Einsatzgebiet der Erfindung zulässig sind, mit anderen Worten im Land in dem das Leitungsrohr verbaut ist. Weiter umfasst der physikalische Layer 6 die LoRa^{®}-Modulation 6b.

Das Bitübertragungsschichtmodul ist vorzugsweise derart ausgestaltet, dass es eine maximale Sendeleistung aufweist, die um eine Dämpfung des sich über dem Leitungsrohr befindlichen Erdreichs kompensiert ist, wobei die Sendeleitung mindestens 0 dBm beträgt. Dabei kann die Sendeleistung des Bitübertragungsmoduls für verschiedene Zusammensetzungen des Erdreichs angepasst werden. Es hat sich gezeigt, dass das Erdreich eine Dämpfung in der Grössenordnung von mindestens 20 dB (ca. 20 dB bei trockenem Erdreich) aufweisen kann, wobei dieser Wert je nach Zusammensetzung der Erde selbstverständlich variieren kann. Die Sendeleistung wird ausserdem auch insofern angepasst, dass allfällige Effekte von Niederschlag berücksichtigt bzw. kompensiert werden, was im weiteren Verlauf der Beschreibung anhand eines Langzeittests deutlich wird.

Über dem physikalischen Layer ist der sog. MAC-Layer (Medienzugriffssteuerungsmodul) vorgesehen, der auch im OSI 7 Layer Modell bzw. in der IEEE-Erweiterung des OSI-Modells spezifiziert ist. Der MAC-Layer 8 entspricht hier dem LoRaWAN^{®} der sich im Gegensatz zu LoRa^{®} auf die Übertragungsprotokolle und in weitestem Sinnen auf ein entsprechend funktionierendes Netzwerk bezieht. Zum Beispiel wird darin definiert wie Geräte innerhalb des LoRaWAN^{®}-Netzwerks miteinander kommunizieren, u.A. das Anmelden von Endgeräten bei einem Netzwerk, die Verschlüsselung, das automatische Anpassen von Datenraten und Sendeleistungen oder das Steuern des zeitlichen Ablaufs. Darin sind die Geräteklassen A, B, C, MAC-Optionen 8a und der LoRaWAN^{®} MAC-Layer 8b spezifiziert. Darüber befindet sich der Applikationslayer 9 gemäss dem OSI 7 Layer Modell. Für diese bevorzugte drahtlose Kommunikationsverbindung mit dem dazugehörigen Protokoll wird auf eine originale Übersicht dieser Technologie der LoRa^{®} und LoRaWAN^{®} der Semtech Corporation, genannt "LoRa® und LoRaWAN®: A Technical Overview December 2019" datiert vom 11 Februar 2020 und auf die originale detaillierte Spezifikation: "LoRaWAN™ 1.1 Specification" Copyright © 2017 LoRa Alliance, Inc. mit Sitz in Oregon, USA, welche Dokumente hiermit durch Bezug aufgenommen sind, verwiesen. Weiter wird auf das Patent EP 3 002 884 B1 verwiesen, in dem die Modulation und der paketbasierte Datentransfer des LoRaWAN^{®} Protokolls beschrieben sind. In diesen Dokumenten sind auch weitere technische Parameter definiert, die bei der vorliegenden Erfindung für die Übertragung zum Tragen kommen, wie z.B. Bandbreiten, Datenraten, Payload-Längen, usw. die hier aus diesem Grund nicht explizit wiederholt werden.

Für die vorliegende Erfindung wurde ein LoRa-Shield SX1262MB2CAS der o.g. Semtech Corporation verwendet, das für das europäische Frequenzband von 868 MHz konfiguriert ist. Wie bereits angedeutet kann dieses LoRa^{®} Übertragungsmodul je nach Land variieren, so dass die dort geltenden Frequenzbandbestimmungen eingehalten werden müssen. Beispielsweise darf ein Endgerät für das verwendete europäische 868 MHz Frequenzband vom Gesetzgeber ein ERP (effective radiated power) von maximal 14 dBm aufweisen. Das o.g. Modul kann maximal mit 22 dBm senden. Um in diesem Fall und bei Berücksichtigung der Erddämpfung von 20 dB (siehe oben) dennoch eine ausreichende Sendeleistung zu haben, kann eine modifizierte Implementation der LoRaWAN^{®}-Software verwendet werden.

Es hat sich bei der Erfindung überraschend gezeigt, dass die Übertragung mit den obigen Eckdaten (CSS, FSCM), und insbesondere mit der LoRaWAN^{®} Technologie mit Abstand am besten geeignet für die spezifische Anwendung der im Erdreich vergrabenen wärmeisolierten Rohre ist. Diese Technologie zeichnet sich allgemein durch eine hohe Reichweite der Übertragung und eine gute Eignung für Indoor-Applikationen aus. Die Eignung dieser Technologie durch Wände übertragen zu können ist für die vorliegende Anwendung, bei der das zu übertragende Signal eine relativ dicke Erdschicht überwinden muss, sehr gut anwendbar.

Das Steuerungsmodul umfasst weiter ein Interface-Modul 9 zur Kommunikation zwischen dem Medienzugriffssteuerungsmodul 8 und den Sensoren. Dieses Modul ist also dafür zuständig, die Messdaten von den Sensoren zum Versenden weiterzuleiten und in umgekehrter Richtung Messungen der Sensoren auszulösen.

Das Interface-Modul hat weiter auch die Aufgabe des Energie-Managements für die anderen Module, also zur Verteilung von Energie an die Sensoren und an das Medienzugriffssteuerungsmodul. Dazu ist es mit einem ersten Energieversorgungsmodul für die Sensoren und das Steuerungsmodul gekoppelt. Dieses Energieversorgungsmodul umfasst mindestens eine Batterie oder einen aufladbaren Akku. Bei der Verwendung der zweiten, bevorzugten Alternative umfasst das Interface-Modul vorzugsweise ein Lademodul, das den Akku mit von ausserhalb der Sensorvorrichtung zugeführter Energie lädt.

Zu diesem Zweck ist es bevorzugt wenn das Interface-Modul einen mit dem ersten Energieversorgungsmodul verbundenen Power-Management-IC umfasst, mittels welchem eine intelligente Energieverteilung konfigurierbar ist. Aufgrund der bevorzugten Anwendung bei vergrabenen Leitungen ist dies vorteilhaft um so viel Energie wie möglich zu sparen. Der Power-Management-IC ist dazu derart ausgestaltet, dass er die Sensoren und/oder das Medienzugriffssteuerungsmodul in einen energiesparenden Schlafmodus zwischen Messungen versetzt und aus diesem Schlafmodus aufweckt. Es ist in Ausführungsformen erwünscht, dass dieser Prozess in Abhängigkeit von einem Ladestatus des ersten Energieversorgungsmoduls geschieht. Beispielsweise könnte es vorgesehen sein, dass bei einem bestimmten niedrigen Ladestatus und, wie im vorliegenden Beispiel 3 Sensoren pro Sensorvorrichtung, lediglich eine Messung eines oder zweier Sensoren ausgelöst wird, während der oder die übrigen Sensoren weiter im Schlafmodus sind, was energiesparend ist. Das kann ausreichend repräsentativ sein, da die Sensoren einer Sensorvorrichtung relativ nahe beieinander sind. Alternativ oder zusätzlich kann der Schlafmodus zwischen zwei aufeinanderfolgenden Messungen eingeleitet werden. Diese Option ist z.B. vorteilhaft wenn relativ lange Messintervalle vorgesehen sind. Auch im Hinblick auf diesen Aspekt ist die LoRaWAN^{®} Technologie vorteilhaft, da sie für den Betrieb in einem energiesparenden Modus entwickelt wurde. Je nach Implementation der vorliegenden Erfindung kann direkt auf LoRa^{®}-integrierte Mechanismen zurückgegriffen werden und es können zusätzliche Mechanismen zur Energieeinsparung vorgesehen werden, wie oben beispielhaft beschrieben.

Das Steuerungsmodul umfasst weiter eine Verschlüsselungseinheit zur Realisierung einer verschlüsselten Kommunikation zwischen der Sensorvorrichtung und der Fernsteuerungsvorrichtung, insbesondere wobei die Verschlüsselungseinheit auf eine AES-Verschlüsselung basiert. Auch im Hinblick auf diesen Aspekt ist die LoRaWAN^{®} Technologie vorteilhaft, da sie eine eingebaute AES-128 Verschlüsselung aufweist.

Die Fernsteuerungsvorrichtung des erfindungsgemässen Systems ist benutzerseitig angesiedelt. Sie umfasst mindestens einen Applikationsserver als Zugangspunkt eines Benutzers, mindestens ein Netzwerk-Gateway (vgl. Fig. 3 und 4) zur Datenkommunikation mit den Sensorvorrichtungen und einen Netzwerkserver für das Management von Verbindungen zwischen dem Netzwerk-Gateway und dem Applikationsserver.

Der Netzwerk-Gateway umfasst bei der bevorzugten Verwendung der LoRaWAN^{®} Technologie entsprechend einen LoRaWAN^{®}-Gateway zur drahtlosen Kommunikation mit der ersten Steuereinheit der Sensorvorrichtungen. Auf die technischen Daten der Übertragung wurde bereits im Kontext des sensorseitigen Steuerungsmoduls eingegangen und sie gelten hier mutatis mutandis. Wenn die Übertragungstechnologie von der LoRaWAN^{®}-Spezifikation abweicht wird selbstverständlich ein entsprechend modifizierter Gateway verwendet. Für die weitere Beschreibung der Erfindung ist aber beispielhaft ein LoRaWAN^{®}-Gateway angenommen. Dabei können je nach Land bei dieser Technologie die Dienste eines LoRaWAN^{®}-Providers der solche LoRaWAN^{®}-Netzwerke betreibt in Anspruch genommen werden. In diesem Zusammenhang wird erwähnt, dass es sich bei den erfindungsgemässen Sensorvorrichtungen im Allgemeinen um sog. IoT-Geräte handelt (Internet-of-Things). Solche Geräte sind mittlerweile weit verbreitet und es gibt eine Vielzahl von Providern die auf diese Art von Geräten zugeschnittene Netzwerke, wie LoRaWAN^{®}-Netzwerke anbieten. Alternativ kann ein LoRaWAN^{®}-Gateway, der für die drahtlose Verbindung mit den Sensorvorrichtungen zuständig ist, mit einem Router verbunden werden, der den LoRaWAN^{®}-Gateway mit dem Internet verbindet, so dass der Benutzer auf diese Weise Zugriff auf die Sensoren bekommt. Dazu kann z.B. ein LTE-Router in Frage kommen.

Der Netzwerkserver der Fernsteuerungsvorrichtung ist für die Internetverbindung mit dem Netzwerk-Gateway zuständig, z.B. verwaltet er die Verbindungen zu einem Server des Internet-Providers, auf dem zunächst die Sensormessdaten zwischengespeichert werden. Der mit dem Netzwerkserver verbundene Applikationsserver ist anschliessend dafür zuständig, diese zwischengespeicherten Daten zu verwalten. Zu diesem Zweck läuft auf dem Applikationsserver eine geeignete Software welche Daten (Uplinks) empfangen und diese Daten entpacken und speichern kann. Die auf diese Weise gespeicherten Daten, also in diesem Fall z.B. die Sensormessdaten, werden dann im Hinblick auf die Isolationsqualität des Leitungsrohrs in einer weiteren Software für den Benutzer ausgewertet. Es kann sich aber auch um bestehende Konfigurationsdaten für die Sensorvorrichtungen handeln, die vom Benutzer abgerufen wurden. Diese weitere Software kann entsprechend auch diese Konfigurationsdaten verwalten und dem Benutzer die Möglichkeit geben, neue Konfigurationsdaten an einen oder an mehreren Sensorvorrichtungen zu schicken. Es ist bevorzugt wenn die weitere Software die Lage der Sensorvorrichtungen auf einer Karte und gewünschte Parameter visuell für den Benutzer mit zugeordneten Sensorvorrichtungen darstellen kann. Dazu hat die LoRaWAN^{®} Technologie mit Vorteil eine GPS-unabhängige eingebaute Möglichkeit zur Ortung der Sensorvorrichtungen.

In Ausführungsformen umfasst die Fernsteuerungsvorrichtung weiter einen mit dem Netzwerkserver verbundenen Join-Server welcher derart ausgestaltet ist, dass er Berechtigungen von Verbindungen von Sensorvorrichtungen und von Applikationsservern überprüft und dem Netzwerkserver eine Freigabe bzw. Nicht-Freigabe jeder Verbindung mitteilt. Weiter ist er vorzugsweise derart ausgestaltet, dass er eine Verschlüsselung der Verbindungen steuert. Zu diesem Zweck kann er als Gegenseite der im Steuerungsmodul eingebauten LoRaWAN^{®}-Verschlüsselung agieren, oder er kann eine andere Verschlüsselungstechnologie beinhalten, wenn kein LoRaWAN^{®} verwendet wird.

Das Steuerungsmodul 1b der erfindungsgemässen Sensorvorrichtung kann in einer Ausführungsform einen Stapelaufbau aufweisen, derart, dass die Antenne am nächsten zur Erdoberfläche angeordnet ist. Bevorzugt ist aber eine möglichst miniaturisierte Integration der verschiedenen Module auf einer einzigen Platine, was insbesondere bei der Einbettung des Steuerungsmoduls in die wärmeisolierende Schicht von Vorteil ist, um eine möglichst kleine Unterbrechung der Isolation durch einen solchen Fremdkörper zu bewirken.

Typischerweise wird das erfindungsgemässe System mit einem erfindungsgemässen Verfahren zur Überwachung der Isolationsqualität eines wärmeisolierten Leitungsrohrs betrieben. Die gewonnenen Messdaten können dazu genutzt werden, die Isolation entlang einer Fernwärmeleitung zu überwachen und Benachrichtigungen zu generieren, dass an einer bestimmten Stelle entlang der Leitung eine Beschädigung vorliegt.

Dabei dient vorzugsweise ein erster Inbetriebnahmeschritt im Zuge dessen die Konfiguration eines verbauten Leitungsrohrs kartografiert wird. Bevorzugt wird dieser Schritt vor der Eingrabung des Leitungsrohrs durchgeführt, indem alle im Leitungsrohr eingebauten Sensoren auf der Basis einer eindeutigen Kennung jedes Sensors identifiziert und jeweils mit geografischen Lageinformationen im Applikationsserver verknüpft werden. Die in diesem Inbetriebnahmeschritt erfolgte Initialisierung muss nur einmal durchgeführt werden. Alternativ dazu kann dieser Schritt automatisch geschehen, indem nach der Eingrabung des Leitungsrohrs beim ersten Verbindungsaufbau mit einer Sensorvorrichtung die Eckdaten der darin zusammengefassten Sensoren erfasst werden. Dazu kann mit Vorteil für das Kartografieren bei der Verwendung der LoRaWAN^{®}-Technologie die darin eingebaute Funktionalität der Ortung der Sensoren verwendet werden.

Beim Verfahren wird in Betrieb in einem ersten Schritt eine Internet-Verbindung vom Applikationsserver eines Benutzers über den o.g. Netzwerkserver und einem Netzwerk-Gateway des Systems hergestellt. Anschliessend wird mittels des o.g. Join-Servers in einem zweiten Schritt ein sog. Join-Verfahren einmalig durchgeführt, bei dem sich das Steuerungsmodul beim Netzwerk-Gateway anmeldet. Diese und weitere Basiskonfigurationsparameter werden vom Netzwerk-Gateway zum Netzwerkserver vorzugsweise verschlüsselt weitergeleitet. Nach der Durchführung der Anmeldung eines bestimmten Steuerungsmoduls, bei der das Steuerungsmodul eine eindeutige Netzwerkadresse zugewiesen bekommt, ist es im Netzwerk angemeldet. Dabei wird ein sog. Mainthread aktiviert. Dieser Programmstrang ist für das Versenden der Daten über das Netzwerk, hier dem LoRaWAN^{®}, das Timing der Anwendungen und dem Datenaustausch mit einem nachfolgend beschriebenen Messthread zuständig.

Anschliessend wird in einem dritten Schritt der gewählte Sensor oder die gewählten Sensoren der Sensorvorrichtung aktiviert indem ein Messthread für den mindestens einen Sensor im Steuerungsmodul gestartet wird. Der Messthread wird vom Mainthread nach erfolgreicher Anmeldung im Netzwerk bzw. optional nach erfolgten Updates gestartet. Dieser Programmstrang ist zuständig für das Handling und Timing der Sensoren, z.B. löst er Messungen gemäss einem definierten Zeitplan oder Messintervallen aus.

In einem vierten Schritt wird vom Messthread eine oder mehrere Messungen mittels eines oder mehreren Sensoren durchgeführt. Der Messthread verpackt die Messdaten in eine Datenstruktur die vorzugsweise auch einen Zeitstempel und/oder eine Gehäusetemperatur der Sensorvorrichtung und/oder eine Akkuspannung des Energieversorgungsmoduls enthält. Weitere Daten können auch vorgesehen werden. Zum Beispiel können insbesondere mehrere Typen von Messdaten die im Rahmen einer Messung durchgeführt wurden (z.B. Temperatur und Feuchtigkeitsgehalt in der isolierenden Schicht) oder mehrere Messungen desselben Typs zusammengepackt werden. Selbstverständlich umfasst ein solches Datenpaket auch die Kennung der Sensorvorrichtung und die Kennung des bestimmten Sensors der Sensorvorrichtung, der die Messung durchgeführt hat. Die Messdaten werden dann mittels dem Steuerungsmodul zum Netzwerk-Gateway und über die Internet-Verbindung zum Applikationsserver übertragen und in einem letzten Schritt ausgewertet. Optional können weitere Messungen ausgelöst werden.

Wie erwähnt ist es beim Verfahren bevorzugt wenn die Messdaten vor der Übertragung an den Netzwerk-Gateway verschlüsselt werden. Jedoch kann die Verschlüsselung auch in anderer Richtung geschehen, indem die vom Applikationsserver gesendeten Befehle auch verschlüsselt werden. Am meisten bevorzugt ist es, die gesamte Kommunikation zwischen Benutzer und Sensoren standardmässig zu verschlüsseln. Der Vorteil ist, dass Dritte keinen Zugang zu den Sensoren bekommen und deren Konfiguration usw. ändern können, z.B. um Messdaten zu fälschen. Bei der Anwendung für ein vergrabenes Leitungsrohr können Messdaten die auf eine Beschädigung hinweisen mit einem erheblichen Aufwand für Reparaturen verbunden sein, so dass eine sichere Kommunikation mit den Sensorvorrichtungen sehr erwünscht ist.

In Ausführungsformen kann bei einem im Netzwerk angemeldeten Steuerungsmodul eine Fernumprogrammierung des Steuerungsmoduls durchgeführt werden. Nach diesem Zwischenschritt kann auch ein Neustart einer Sensorvorrichtung ausgelöst werden, bevor weitere Messungen durchgeführt werden. Bei der Fernumprogrammierung kann es sich vorzugsweise um eine oder mehrere der folgenden Aktionen handeln:
- Update einer Firmware; dabei kann es sich insbesondere um Updates die mit dem Übertragungsprotokoll, also z.B. mit dem LoRaWAN^{®}, zusammenhängen, handeln.
- Festlegen oder Löschen von Verschlüsselungsparametern; dabei handelt es sich um die Konfiguration bzw. Änderung dieser Parameter um z.B. neue Berechtigungen hinzuzufügen oder zu löschen oder Passwörter, Schlüssel etc. zu ändern.
- Auslesen von Energieversorgungsparametern; damit kann der Benutzer aus der Ferne überprüfen wieviel Energie bei einer bestimmten Sensorvorrichtung zur Verfügung steht, bevor eine oder mehrere Messungen durchgeführt werden.
- Ändern von Messparametern; dabei kann es sich um das Spezifizieren von automatischen, sich wiederholenden oder manuellen Messungen, Ändern von Messintervallen oder Messintervallmuster oder Gesamtmessdauer handeln.

### Langzeitfeldtest

Nachfolgend werden einige Resultate eines Langzeitfeldtests mit einem erfindungsgemässen System angegeben. Dabei wurde die Verbindung auf der Basis eines LoRaWAN^{®} Netzwerks aufgebaut. Die Tests wurden an in 1.5 m Tiefe vergrabenen Leitungsrohren ausgeführt. Dabei wurde ein erstes Leitungsrohr mit drei Sensorvorrichtungen mit einer ersten Antennenkonfiguration und ein zweites Leitungsrohr mit drei Sensorvorrichtungen mit einer zweiten Antennenkonfiguration bestückt, wobei die Sensorvorrichtungen in ein PU-Schaum eingebettet wurden. Messungen wurden während drei Monaten in bestimmten Zeitintervallen durchgeführt. Der Unterschied zwischen den zwei Antennenkonfigurationen lag im Abstand der Antenne vom Gehäusedeckel, also der Abstand zum Erdreich. Bei der ersten Antennenkonfiguration war die Antenne weiter vom Erdreich weg als bei der zweiten Antennenkonfiguration.

Es wurden 7125 Uplink-Pakete übertragen. 7088 Pakete wurden übermittelt und 37 Pakete wurden nicht übermittelt, was einer Erfolgsrate von 99.48% entspricht.

Die Empfangssignalstärke (RSSI) lag insgesamt im Bereich -119 dBm bis -62 dBm. Die RSSI der drei Sensorvorrichtungen mit der ersten Antennenkonfiguration lag im Bereich -117 dBm bis -64 dBm (etwa die Hälfte der Pakete). Bei der zweiten Antennenkonfiguration lag sie im Bereich -119 dBm bis -62 dBm (andere Hälfte der Pakete).

Der Signal-Rausch-Abstand (SNR) lag im Bereich -1.8 dB bis 14.5 dB. Der SNR der bei der ersten Antennenkonfiguration lag im Bereich -1.8 dB bis 14.5 dB. Bei der zweiten Antennenkonfiguration lag er im Bereich 0.2 dB bis 14.2 dB.

Anhaltender Niederschlag verursachte eine Reduktion der mittleren RSSI von bis zu 20 dB, wobei einzelne Uplinks um bis zu 35 dB gedämpft wurden. Eine Zunahme der verlorenen Datenpakete nach Niederschlag wurde nicht beobachtet. Ein Unterschied zwischen den beiden Antennenkonfigurationen hat sich sich erst einige Tage nach dem Niederschlag gezeigt, wobei dieser bis zu 7 dB betrug. Dieses Verhalten wird darauf zurückgeführt, dass während dieser Zeit das Wasser im Erdreich versickert und dadurch der Antenne immer näher gekommen ist, bevor das Erdreich wieder zu trocknen begann.

Aus dem Langzeittest wurde deutlich, dass LoRaWAN ein funktionierender Ansatz zur Datenübertragung unter den schwierigen Umständen der drahtlosen Übertragung aus dem Erdreich ist. Die Erfindung macht es also möglich wärmegedämmte Leitungsrohre bezüglich der Qualität ihrer Isolation zu überprüfen und zu überwachen, ohne an ein bestimmtes Material des Innenrohrs gebunden zu sein. Aufgrund des modularen Aufbaus können je nach Anforderungen z.B. in Bezug auf die geografische Umgebung des Leitungsrohrs beliebige "Sensordichten" vorgesehen werden. Durch die Langzeitanwendbarkeit der Erfindung ist es möglich über Jahre eine grosse Menge von Daten über mehrere interessierende Parameter der Isolation zu sammeln und dadurch Erkenntnisse über das Langzeitverhalten der Isolation bei unterschiedlichen äusserlichen Bedingungen zu gewinnen. Nicht zuletzt können Leckagen und andere Beschädigungen effizient und lagebezogen detektiert werden.

## Patentansprüche

1. Sensorvorrichtung (1) zur Überwachung der Isolationsqualität eines wärmeisolierten Leitungsrohrs (2), insbesondere eines im Erdreich (3a) vergrabenen wärmeisolierten Leitungsrohrs, welches Leitungsrohr ein Innenrohr (2a), einen das Innenrohr umgebenden Aussenmantel (2c) aus Kunststoff und eine wärmeisolierende Schicht (2b) zwischen dem Innenrohr und dem Aussenmantel umfasst,
umfassend:
- mindestens einen Sensor (1a) zur Messung mindestens eines die Isolationsqualität direkt oder indirekt charakterisierenden Parameters der wärmeisolierenden Schicht,
- ein Steuerungsmodul (1b) zum Auslösen von Sensormessungen und Auslesen von Messdaten vom Sensor, und
- ein erstes Energieversorgungsmodul für den mindestens einen Sensor und das Steuerungsmodul,
wobei das Steuerungsmodul derart ausgestaltet ist, dass es mittels drahtloser Datenübertragung einer benutzerseitigen Fernsteuerungsvorrichtung (5) Messdaten vom mindestens einen Sensor sendet,
wobei der mindestens eine Sensor in der wärmeisolierenden Schicht des Leitungsrohrs einbettbar ist,
**dadurch gekennzeichnet, dass** der mindestens eine Sensor derart ausgestaltet ist, dass er als charakterisierenden Parameter eine CO2-Konzentration misst.

2. Sensorvorrichtung nach Anspruch 1, wobei das Steuerungsmodul derart ausgestaltet ist, dass es Konfigurationsdaten für den Sensor mit der benutzerseitigen Fernsteuerungsvorrichtung austauscht.

3. Sensorvorrichtung nach einem der vorangehenden Ansprüche,
wobei das Steuerungsmodul an der Aussenwand des Aussenmantels des Leitungsrohrs befestigbar ist, oder
wobei das Steuerungsmodul in der wärmeisolierenden Schicht einbettbar ist.

4. Sensorvorrichtung nach einem der vorangehenden Ansprüche,
wobei das Steuerungsmodul drahtgebunden, insbesondere durch den Aussenmantel des Leitungsrohrs hindurch, mit dem mindestens einen Sensor verbunden ist, oder
wobei das Steuerungsmodul drahtlos mit dem mindestens einen Sensor verbunden ist.

5. Sensorvorrichtung nach einem der vorangehenden Ansprüche, wobei das Steuerungsmodul folgendes umfasst:
- eine Antenne für die drahtlose Datenübertragung mit der Fernsteuerungsvorrichtung,
- ein Bitübertragungsschichtmodul (6) zum Senden und Empfangen von Konfigurationsdaten und/oder Messdaten enthaltenden Funksignalen mittels der Antenne,
- ein Medienzugriffssteuerungsmodul (8) zur Steuerung des Bitübertragungsschichtmoduls,
- ein Interface-Modul (9) zur Kommunikation zwischen dem Medienzugriffssteuerungsmodul und dem mindestens einen Sensor und zur Verteilung der Energie vom ersten Energieversorgungsmodul an den mindestens einen Sensor und an das Medienzugriffssteuerungsmodul.

6. Sensorvorrichtung nach Anspruch 5, wobei das Bitübertragungsschichtmodul zum paketbasierten Senden und Empfangen von Daten mit einer Frequenz ausgewählt aus: 13.56 MHz, 27 MHz, 169 MHz, 433 MHz, 868 MHz, 915 MHz, 2.4 GHz, bevorzugt 868 MHz, und einer Datenrate zwischen 292 bit/s und 50 kbit/s, ausgestaltet ist, insbesondere wobei ein Datenpaket eine Chirp-Spread-Spectrum-Modulation (CSS) für die Präambel und eine Frequency-Shift-Chirp-modulierte Payload (FSCM) umfasst.

7. Sensorvorrichtung nach Anspruch 5 oder 6, wobei das Bitübertragungsschichtmodul derart ausgestaltet ist, dass es eine maximale Sendeleistung aufweist, die um eine Dämpfung des sich über dem Leitungsrohr befindlichen Erdreichs kompensiert ist, wobei die Sendeleitung mindestens 0 dBm beträgt.

8. Sensorvorrichtung nach einem der Ansprüche 1 bis 7 in Kombination mit Anspruch 5, wobei das Interface-Modul einen mit dem ersten Energieversorgungsmodul verbundenen Power-Management-IC zur Energieversorgung des mindestens einen Sensors und das Medienzugriffssteuerungsmodul umfasst, welcher Power-Management-IC insbesondere derart ausgestaltet ist, dass er den mindestens einen Sensor und/oder das Medienzugriffssteuerungsmodul, insbesondere in Abhängigkeit von einem Ladestatus des ersten Energieversorgungsmoduls und/oder zwischen zwei aufeinanderfolgende Messungen, in einen energiesparenden Schlafmodus zwischen Messungen versetzt und aus diesem Schlafmodus aufweckt.

9. Sensorvorrichtung nach einem der vorangehenden Ansprüche, wobei das Steuerungsmodul weiter eine Verschlüsselungseinheit zur Realisierung einer verschlüsselten Kommunikation zwischen der Sensorvorrichtung und der Fernsteuerungsvorrichtung umfasst, insbesondere wobei die Verschlüsselungseinheit auf eine AES-Verschlüsselung basiert.

10. System zur Überwachung der Isolationsqualität eines wärmeisolierten Leitungsrohrs (2), insbesondere eines im Erdreich (3a) vergrabenen wärmeisolierten Leitungsrohrs, welches Leitungsrohr ein Innenrohr (2a), einen das Innenrohr umgebenden Aussenmantel (2c) aus Kunststoff und eine wärmeisolierende Schicht (2b) zwischen dem Innenrohr und dem Aussenmantel umfasst,
wobei das System mindestens eine am Leitungsrohr anordenbare Sensorvorrichtung (1) nach einem der vorangehenden Ansprüche und mindestens eine benutzerseitige Fernsteuerungsvorrichtung (5) zur Konfiguration der Sensorvorrichtung und Auslösung von Messungen umfasst, wobei die Sensorvorrichtung und die benutzerseitige Fernsteuerungsvorrichtung derart ausgestaltet sind, dass sie drahtlos miteinander kommunizieren.

11. System nach Anspruch 10, wobei das mindestens eine Netzwerk-Gateway über der Erdoberfläche, insbesondere in unmittelbarer Nähe der Erdoberfläche fest installiert ist, oder wobei ein mobiles Netzwerk-Gateway vorgesehen ist, das zur Kommunikation mit einer oder mehreren Sensorvorrichtungen entlang dem Leitungsrohr bewegbar ist.

12. Wärmeisoliertes Leitungsrohr umfassend ein Innenrohr (2a), insbesondere aus Kunststoff, einen das Innenrohr umgebenden Aussenmantel (2c) aus Kunststoff und eine wärmeisolierende Schicht (2b) zwischen dem Innenrohr und dem Aussenmantel, und weiter umfassend mindestens eine Sensorvorrichtung (1) nach einem der Ansprüche 1 bis 9.

13. Wärmeisoliertes Leitungsrohr nach Anspruch 12, umfassend eine Vielzahl von Sensorvorrichtungen, die in einem Abstand (d2) voneinander zwischen 5m und 15m, bevorzugt 10m, entlang des Leitungsrohrs verteilt sind.

14. Wärmeisoliertes Leitungsrohr nach einem der Ansprüche 12 oder 13, wobei jede Sensorvorrichtung mindestens 3 Sensoren, insbesondere genau 3 Sensoren, umfasst.

15. Verfahren zur Überwachung der Isolationsqualität eines wärmeisolierten Leitungsrohrs, insbesondere eines wärmeisolierten Leitungsrohrs nach einem der Ansprüche 12 bis 14, mittels des Systems nach einem der Ansprüche 10 bis 11 umfassend die Schritte:
a) Aufbauen einer Internet-Verbindung von einem Applikationsserver über einen Netzwerkserver und einen Netzwerk-Gateway des Systems,
b) Anmelden des Steuerungsmoduls einer Sensorvorrichtung über dem Netzwerk-Gateway bei einem Join-Server,
c) Aktivieren mindestens eines Sensors der Sensorvorrichtung indem ein Messthread für den mindestens einen Sensor im Steuerungsmodul gestartet wird,
d) Durchführen mindestens einer Messung mittels des mindestens einen Sensors,
e) Übertragen von Messdaten des mindestens einen Sensors mittels dem Steuerungsmodul zum Netzwerk-Gateway und über die Internet-Verbindung zum Applikationsserver,
f) Auswerten der Messdaten auf dem Applikationsserver, und
g) optional Wiederholen der Schritte d) bis f).

16. Verfahren nach Anspruch 15, wobei ein Datenaustausch beim Schritt b) und/oder die Übertragung der Messdaten beim Schritt e) verschlüsselt wird bzw. werden.

17. Verfahren nach Anspruch 15 oder 16, wobei bei einem angemeldeten Steuerungsmodul ein Schritt c1) durchgeführt wird, in dem eine Fernumprogrammierung des Steuerungsmoduls erfolgt, insbesondere wobei die Fernumprogrammierung eine oder mehrere der folgenden Aktionen umfasst: Update einer Firmware, Festlegen oder Löschen von Verschlüsselungsparametern, Auslesen von Energieversorgungsparametern, Ändern von Messparametern, insbesondere Spezifizieren von automatischen, sich wiederholenden oder manuellen Messungen, Ändern von Messintervallen oder Messintervallmuster oder Gesamtmessdauer.

18. Verfahren nach einem der Ansprüche 15 bis 17, umfassend einen ersten Inbetriebnahmeschritt im Zuge dessen ein Kartografieren der Konfiguration eines verbauten Leitungsrohrs durchgeführt wird, insbesondere vor einer Eingrabung des verbauten Leitungsrohrs durchgeführt wird, indem alle im Leitungsrohr eingebauten Sensoren auf der Basis einer eindeutigen Kennung jedes Sensors identifiziert und jeweils mit geografischen Lageinformationen im Applikationsserver verknüpft werden.

## Claims

1. Sensor device (1) for monitoring the insulation quality of a thermally insulated pipeline (2), in particular a thermally insulated pipeline (2) buried in the ground (3a), which pipeline comprises an inner pipe (2a), an outer jacket (2c) made of plastic surrounding the inner pipe, and a thermally insulating layer (2b) between the inner pipe and the outer jacket,
comprising:
- at least one sensor (1a) for measuring at least one parameter of the thermally insulating layer that directly or indirectly characterizes the insulation quality,
- a control module (1b) for triggering sensor measurements and reading measurement data from the sensor, and
- a first power supply module for the at least one sensor and the control module,
wherein the control module is configured such that it transmits measurement data from the at least one sensor to a user-side remote control device (5) via wireless data transmission,
wherein the at least one sensor is embedded in the heat-insulating layer of the pipeline,
**characterized in that** the at least one sensor is configured to measure a CO2 concentration as a characteristic parameter.

2. Sensor device according to claim 1, wherein the control module is configured to exchange configuration data for the sensor with the user-side remote control device.

3. Sensor device according to any of the preceding claims,
wherein the control module is attachable to the outer wall of the outer jacket of the pipeline, or
wherein the control module can be embedded in the thermally insulating layer.

4. Sensor device according to any of the preceding claims,
wherein the control module is connected to the at least one sensor via a wired connection, in particular through the outer jacket of the pipeline, or
wherein the control module is wirelessly connected to the at least one sensor.

5. Sensor device according to any of the preceding claims, wherein the control module comprises:
- an antenna for the wireless data transmission with the remote control device,
- a bit transmission layer module (6) for transmitting and receiving radio signals containing configuration data and/or measurement data via the antenna,
- a media access control module (8) for controlling the bit transmission layer module,
- an interface module (9) for communication between the media access control module and the at least one sensor, and for distributing power from the first power supply module to the at least one sensor and to the media access control module.

6. Sensor device according to claim 5, wherein the bit transmission layer module is configured to transmit and receive data in packets at a frequency selected from: 13.56 MHz, 27 MHz, 169 MHz, 433 MHz, 868 MHz, 915 MHz, 2.4 GHz, preferably 868 MHz, and a data rate between 292 bit/s and 50 kbit/s; in particular, wherein a data packet comprises chirp-spread-spectrum (CSS) modulation for the preamble and a frequency-shift-chirp-modulated (FSCM) payload.

7. Sensor device according to claim 5 or 6, wherein the bit transmission layer module is configured such that it has a maximum transmission power that is compensated for attenuation caused by the soil above the pipeline, wherein the transmission power is at least 0 dBm.

8. Sensor device according to any one of claims 1 to 7 in combination with claim 5, wherein the interface module comprises a power management IC connected to the first power supply module for supplying power to the at least one sensor and the media access control module, said power management IC being configured, in particular, such that it places the at least one sensor and/or the media access control module in an energy saving sleep mode, in particular depending on a charge status of the first power supply module and/or between two consecutive measurements, and wakes them from this sleep mode.

9. Sensor device according to any of the preceding claims, wherein the control module further comprises an encryption unit for implementing encrypted communication between the sensor device and the remote control device, in particular wherein the encryption unit is based on AES encryption.

10. System for monitoring the insulation quality of a thermally insulated pipeline (2), in particular a thermally insulated pipeline buried in the ground (3a), which pipeline comprises an inner pipe (2a), an outer jacket (2c) made of plastic surrounding the inner pipe, and a thermally insulating layer (2b) between the inner pipe and the outer jacket,
wherein the system comprises at least one sensor device (1) according to one of the preceding claims, which can be arranged on the pipeline, and at least one user-side remote control device (5) for configuring the sensor device and triggering measurements, wherein the sensor device and the user-side remote control device are configured such that they communicate with each other wirelessly.

11. System according to claim 10, wherein the at least one network gateway is permanently installed above the earth9s surface, in particular in the immediate vicinity of the earth9s surface, or wherein a mobile network gateway is provided that can be moved along the pipeline to communicate with one or more sensor devices.

12. Thermally insulated pipeline comprising an inner pipe (2a), in particular made of plastic, an outer jacket (2c) made of plastic surrounding the inner pipe, and a thermally insulating layer (2b) between the inner pipe and the outer jacket, and further comprising at least one sensor device (1) according to any one of claims 1 to 9.

13. Thermally insulated pipeline according to claim 12, comprising a plurality of sensor devices distributed along the pipeline at a distance (d2) from one another of between 5 m and 15 m, preferably 10 m.

14. Thermally insulated pipeline according to any one of claims 12 or 13, wherein each sensor device comprises at least 3 sensors, in particular exactly 3 sensors.

15. Method for monitoring the insulation quality of a thermally insulated pipeline, in particular a thermally insulated pipeline according to any one of claims 12 to 14, using the system according to any one of claims 10 to 11, comprising the steps of:
a) establishing an Internet connection from an application server via a network server and a network gateway of the system,
b) registering the control module of a sensor device with a join server via the network gateway,
c) activating at least one sensor of the sensor device by starting a measurement thread for the at least one sensor in the control module,
d) performing at least one measurement using the at least one sensor,
e) transmitting measurement data from the at least one sensor via the control module to the network gateway and over the Internet connection to the application server,
f) evaluating the measurement data on the application server, and
g) optionally repeating steps d) to f).

16. Method according to claim 15, wherein data exchange in step b) and/or the transmission of the measurement data in step e) is or are encrypted.

17. Method according to claim 15 or 16, wherein, for a registered control module, a step c1) is performed in which the control module is remotely reprogrammed, in particular wherein the remote reprogramming comprises one or more of the following actions: updating firmware, setting or deleting encryption parameters, reading power supply parameters, changing measurement parameters, in particular specifying automatic, repetitive, or manual measurements, changing measurement intervals, measurement interval patterns, or total measurement duration.

18. Method according to any one of claims 15 to 17, comprising a first commissioning step in the course of which the configuration of an installed pipeline is mapped, in particular prior to the installation of the pipeline, by identifying all sensors installed in the pipeline based on a unique identifier for each sensor and linking each one to geographic location information in the application server.

## Revendications

1. Dispositif de capteur (1) destiné à surveiller la qualité de l9isolation d9un pipeline isolée thermiquement (2), en particulier d9un pipeline isolé thermiquement (2) enterrée dans le sol (3a), lequel pipeline comprend un tuyau intérieur (2a), une enveloppe extérieure (2c) en matière plastique entourant le tuyau intérieur, et une couche d9isolation thermique (2b) entre le tuyau intérieur et l9enveloppe extérieure,
comprenant :
- au moins un capteur (1a) destiné à mesurer au moins un paramètre de la couche d9isolation thermique qui caractérise directement ou indirectement la qualité de l9isolation,
- un module de commande (1b) destiné à déclencher les mesures du capteur et à lire les données de mesure provenant de celui-ci, et
- un premier module d9alimentation électrique pour le au moins un capteur et le module de commande,
dans lequel le module de commande est configuré de telle sorte qu9il transmet les données de mesure provenant du au moins un capteur à un dispositif de commande à distance côté utilisateur (5) via une transmission de données sans fil,
dans lequel le au moins un capteur est intégré dans la couche d9isolation thermique du pipeline,
**caractérisé en ce que** le au moins un capteur est configuré pour mesurer une concentration en CO₂ en tant que paramètre caractéristique.

2. Dispositif de capteur selon la revendication 1, dans lequel le module de commande est configuré pour échanger des données de configuration du capteur avec le dispositif de commande à distance côté utilisateur.

3. Dispositif de capteur selon l9une quelconque des revendications précédentes,
dans lequel le module de commande peut être fixé à la paroi extérieure de l9enveloppe extérieure du pipeline, ou
dans lequel le module de commande peut être intégré dans la couche d9isolation thermique.

4. Dispositif de capteur selon l9une quelconque des revendications précédentes,
dans lequel le module de commande est relié à au moins un capteur via une connexion filaire, en particulier à travers la gaine extérieure du pipeline, ou
dans lequel le module de commande est relié sans fil à l'au moins un capteur.

5. Dispositif de capteur selon l9une quelconque des revendications précédentes, dans lequel le module de commande comprend :
- une antenne pour la transmission sans fil de données avec le dispositif de commande à distance,
- un module de couche de transmission de bits (6) destiné à émettre et à recevoir des signaux radio contenant des données de configuration et/ou des données de mesure via l9antenne,
- un module de commande d9accès à des données (8) destiné à commander le module de couche de transmission de bits,
- un module d9interface (9) destiné à assurer la communication entre le module de commande d9accès à des données et le au moins un capteur, et à distribuer l9énergie provenant du premier module d9alimentation vers le au moins un capteur et vers le module de commande d9accès à des données.

6. Dispositif capteur selon la revendication 5, dans lequel le module de couche de transmission de bits est configuré pour transmettre et recevoir des données par paquets à une fréquence choisie parmi : 13,56 MHz, 27 MHz, 169 MHz, 433 MHz, 868 MHz, 915 MHz, 2,4 GHz, de préférence 868 MHz, et à un débit de données compris entre 292 bits/s et 50 kbit/s ; en particulier, dans lequel un paquet de données comprend une modulation à spectre étalé par chirp (CSS) pour le préambule et une charge utile modulée par chirp à décalage de fréquence (FSCM).

7. Dispositif capteur selon la revendication 5 ou 6, dans lequel le module de couche de transmission de bits est configuré de telle sorte qu9il présente une puissance d9émission maximale compensant l9atténuation causée par le sol au-dessus du pipeline, la puissance d9émission étant d9au moins 0 dBm.

8. Dispositif de capteur selon l9une quelconque des revendications 1 à 7 en combinaison avec la revendication 5, dans lequel le module d9interface comprend un circuit intégré de gestion de l9alimentation connecté au premier module d9alimentation pour alimenter en énergie le au moins un capteur et le module de commande d9accès à des données, ledit circuit intégré de gestion de l9alimentation étant configuré, en particulier, de manière à placer le au moins un capteur et/ou le module de commande d9accès à des données dans un mode veille à économie d9énergie, notamment en fonction d9un état de charge du premier module d9alimentation et/ou entre deux mesures consécutives, et les réveille de ce mode veille.

9. Dispositif de capteur selon l9une quelconque des revendications précédentes, dans lequel le module de commande comprend en outre une unité de chiffrement destinée à mettre en Suvre une communication chiffrée entre le dispositif de capteur et le dispositif de commande à distance, en particulier dans lequel l9unité de chiffrement est basée sur le chiffrement AES.

10. Système de surveillance de la qualité de l9isolation d9un pipeline isolé thermiquement (2), en particulier d9un pipeline isolé thermiquement enterré dans le sol (3a), lequel pipeline comprend un tuyau intérieur (2a), une gaine extérieure (2c) en plastique entourant le tuyau intérieur, et une couche d9isolation thermique (2b) entre le tuyau intérieur et l9enveloppe extérieure,
dans lequel le système comprend au moins un dispositif capteur (1) selon l9une des revendications précédentes, qui peut être disposé sur le pipeline, et au moins un dispositif de commande à distance côté utilisateur (5) destiné à configurer le dispositif capteur et à déclencher des mesures, le dispositif capteur et le dispositif de commande à distance côté utilisateur étant configurés de manière à communiquer entre eux sans fil.

11. Système selon la revendication 10, dans lequel la au moins un réseau passerelle est installé de manière permanente au-dessus de la surface du sol, en particulier à proximité immédiate de la surface du sol, ou dans lequel il est prévu un réseau passerelle mobile pouvant être déplacé le long du pipeline pour communiquer avec un ou plusieurs dispositifs de capteur.

12. Pipeline isolé thermiquement comprenant un tuyau intérieur (2a), notamment en plastique, une gaine extérieure (2c) en plastique entourant le tuyau intérieur, et une couche d9isolation thermique (2b) entre le tuyau intérieur et la gaine extérieure, et comprenant en outre au moins un dispositif de capteur (1) selon l9une quelconque des revendications 1 à 9.

13. Pipeline isolé thermiquement selon la revendication 12, comprenant une pluralité de dispositifs de capteur répartis le long du pipeline à une distance (d2) les uns des autres comprise entre 5 m et 15 m, de préférence 10 m.

14. Pipeline isolé thermiquement selon l9une quelconque des revendications 12 ou 13, dans lequel chaque dispositif de capteur comprend au moins 3 capteurs, en particulier exactement 3 capteurs.

15. Procédé de surveillance de la qualité de l9isolation d9un pipeline isolé thermiquement, en particulier d9un pipeline isolé thermiquement selon l9une quelconque des revendications 12 à 14, à l9aide du système selon l9une quelconque des revendications 10 à 11, comprenant les étapes consistant à :
a) établir une connexion Internet à partir d9un serveur d9applications via un serveur réseau et un réseau passerelle du système,
b) enregistrer le module de commande d9un dispositif capteur auprès d9un serveur d9enregistrement via le réseau passerelle,
c) activer au moins un capteur du dispositif de capteur en lançant un thread de mesure pour ledit au moins un capteur dans le module de commande,
d) effectuer au moins une mesure à l9aide dudit au moins un capteur,
e) transmettre les données de mesure provenant dudit au moins un capteur via le module de commande au réseau passerelle, puis via la connexion Internet vers le serveur d9applications,
f) évaluer les données de mesure sur le serveur d9applications, et
g) répéter éventuellement les étapes d) à f).

16. Procédé selon la revendication 15, dans lequel l9échange de données à l9étape b) et/ou la transmission des données de mesure à l9étape e) est ou sont chiffrés.

17. Procédé selon la revendication 15 ou 16, dans lequel, pour un module de commande enregistré, on effectue une étape c1) au cours de laquelle le module de commande est reprogrammé à distance, en particulier dans laquelle la reprogrammation à distance comprend une ou plusieurs des actions suivantes : mise à jour du microlo-giciel, définition ou suppression de paramètres de chiffrement, lecture des paramètres d9alimentation électrique, modification des paramètres de mesure, en particulier spécification de mesures automatiques, répétitives ou manuelles, modification des intervalles de mesure, des schémas d9intervalles de mesure ou de la durée totale de mesure.

18. Procédé selon l9une quelconque des revendications 15 à 17, comprenant une première étape de mise en service au cours de laquelle la configuration d9un pipeline installé est cartographiée, en particulier avant l9installation du pipeline, en identifiant tous les capteurs installés dans le pipeline sur la base d9un identifiant unique pour chaque capteur et en associant chacun d9eux à des informations de localisation géographique dans le serveur d9application.
